# FASCICULE DE BREVET EUROPEEN

(11) **EP 0 582 501 B1**
(45) Date de publication et mention de la délivrance du brevet: **09.10.1996**
(21) Numéro de dépôt: 93401849.0
(22) Date de dépôt: 19.07.1993
(51) Int. Cl.: F16J 12/00, B21D 51/24

(54) **Procédé de fabrication d'un réservoir métallique**
Herstellungsverfahren eines metallischen Behälters
Manufacturing method of a metallic vessel

(30) Priorité: 31.07.1992 FR 9209643
(43) Date de publication de la demande: 09.02.1994
(73) Titulaire: INSTITUT FRANCAIS DU PETROLE, 92502 Rueil-Malmaison (FR)
(72) Inventeur: Huvey, Michel, F-78380 Bougival (FR)

(56) Documents cités:
- DE-C- 604 636
- FR-A- 2 669 396
- US-A- 2 106 495
- US-A- 2 222 762

## Description

La présente invention concerne un procédé de fabrication d'un réservoir métallique résistant, capable de supporter des pressions élevées et présentant un poids unitaire faible.

Le procédé décrit selon la présente invention permet de fabriquer une structure légère avec un faible prix de revient, une fabrication rapide, et autorise une adaptation aisée des structures ou auto-adaptation à de futures utilisations.

Ce procédé s'applique plus particulièrement au formage ou mise en forme d'une gaine constituée en un matériau qui présente un allongement plastique moyen, plus particulièrement un métal à allongement plastique moyen. Dans la suite du texte on définit par matériau à allongement plastique moyen un matériau dont les caractéristiques sont comprises entre les caractéristiques des matériaux dits "cassants" et les matériaux à très haut allongement plastique, par exemple un allongement compris entre 10 et 30%.

Le brevet FR-2.669.396 enseigne de fabriquer un réservoir présentant un faible poids unitaire tout en conservant une tenue à la pression suffisante pour stocker des fluides sous pression. Pour cela, on utilise une gaine déjà formée comportant deux fonds hémisphériques séparés par une zone cylindrique ondulées. On muni ensuite cette gaine de renforts circonférentiaux et longitudinaux pour obtenir la résistance à la pression.

La demande de brevet FR-91/01.193 (publiée le 07.08.92 sous le N°2672370) décrit un procédé de fabrication d'un réservoir métallique qui nécessite l'utilisation de métaux à très haut allongement plastique de coûts relativement élevés ou de très faible résistance à la traction.

L'idée essentielle développée dans la présente invention est d'utiliser une presse et une matrice pour mettre en forme la gaine métallique, la matrice étant constituée pour sa partie cylindrique, d'un tube thermoplastique ondulé renforcé, décrit précédemment dans le brevet FR-2.553.860, le tube et la matrice étant imbriqués l'un dans l'autre après fabrication; la gaine en métal par exemple étant placée à l'intérieur du tube ondulé armé constituant la matrice.

Le nouveau procédé selon la présente invention offre l'avantage de pouvoir utiliser des matériaux d'allongement plastique moyen et de résistance plus élevée que celle des matériaux à très haut allongement plastique. Ainsi on diminue les coûts de fabrication en utilisant moins de matière, une matière moins onéreuse et on allège la structure finale du réservoir.

Le procédé de fabrication du réservoir selon la présente invention utilisant un tube ondulé dont les parties externes creuses sont pourvues d'éléments de renforts comprend en combinaison les étapes suivantes :
a) on place à l'intérieur du tube ondulé une gaine interne métallique à allongement plastique moyen comportant deux fonds séparés par une zone cylindrique de longueur au moins égale à la longueur dudit tube ondulé, ladite gaine interne étant pourvue d'au moins une ouverture sur au moins un de ses fonds; et
b) on procède au formage du réservoir en exerçant une pression longitudinale sur la gaine interne.

La réalisation du tube peut comporter les étapes suivantes :
- on renforce circonférentiellement ledit tube ondulé en garnissant sur au moins une partie de leur hauteur H, les parties externes creuses dudit tube, d'un élément de renfort circonférentiel, puis
- on stabilise l'élément de renfort circonférentiel; et
- on étire le tube ondulé armé et on le stabilise dans sa nouvelle forme étirée;
On peut placer autour du tube ondulé armé un élément, tel qu'un tube permettant d'éviter le flambage longitudinal au cours de l'opération de formage.

L'étape de formage peut se faire par un raccourcissement de la longueur globale de l'ensemble formé par le tube ondulé, la gaine interne à allongement plastique moyen et le tube extérieur évitant le flambage longitudinal.

L'étape de formage peut comporter les opérations suivantes :
- on fait pénétrer dans la gaine interne un liquide sous pression de façon à évacuer l'air contenu dans la gaine interne. On obtient ainsi une montée en pression dans le réservoir;
- on ferme l'arrivée du liquide;
- on exerce une pression longitudinale sur la gaine tout en contrôlant la décharge du liquide hors de la gaine.

On décharge le liquide hors du réservoir, par exemple, en suivant une courbe de décharge optimale préétablie.

On contrôle la décharge du liquide, par exemple, en mesurant au moins un paramètre caractéristique de l'état de l'opération de formage.

Ainsi on peut utiliser comme paramètre caractéristique une mesure de la pression régnant dans la gaine interne, ou de la pression prise au niveau du piston ou du déplacement du piston ou encore le travail du piston.

On peut utiliser pour éviter le flambage longitudinal de l'ensemble tube ondulé et gaine interne un tube rigide en flexion.

On utilise des éléments de renfort circonférentiels réalisés en une résine stabilisable renforcée de fibres, et on soumet chacun d'eux à un traitement permettant la stabilisation de la composition stabilisable.

De façon similaire on peut employer des éléments de renfort circonférentiels réalisés en une résine photoréticulable que l'on stabilise par exposition à l'action d'une lampe génératrice de rayonnement ultraviolet.

On peut aussi utiliser des éléments de renfort circonférentiels réalisés en une résine thermoréticulable que l'on maintient à l'étape de stabilisation dans des conditions permettant à la réticulation de se produire.

La résine peut être une résine thermodurcissable que l'on stabilise par chauffage jusqu'à une température permettant le durcissement de la résine.

La présente invention concerne aussi un dispositif pour le formage d'un réservoir métallique comprenant un tube ondulé, dont les parties externes creuses sont pourvues d'éléments de renfort, caractérisé en ce que le dispositif comprend :
- des moyens de placement, à l'intérieur du tube ondulé, d'une gaine interne métallique à allongement plastique moyen comportant deux fonds séparés par une zone cylindrique de longueur au moins égale à la longueur dudit tube ondulé, ladite gaine étant pourvue d'au moins une ouverture sur au moins un de ses fonds,
- des moyens d'alimentation et de décharge de fluide reliés à ladite ouverture de la gaine pour introduire le fluide à l'intérieur de celle-ci ou pour l'en évacuer,
- des moyens de formage comprenant deux matrices de formage venant s'appliquer sur les fonds de la gaine, et
- des moyens de compression coopérant avec lesdites matrices pour comprimer la gaine dans le sens longitudinal de manière à appliquer la paroi cylindrique de la gaine contre le tube ondulé.

Les moyens de compression pourront comprendre une presse.

L'invention sera mieux comprise et d'autres buts, caractéristiques, détails et avantages de celle-ci apparaîtront plus clairement au cours de la description explicative qui va suivre, faite en référence aux dessins schématiques annexés donnés uniquement à titre d'exemple, illustrant différents modes de réalisation et dans lesquels:
- La figure 1 décrit un moule à paroi ondulé renforcée qui va servir à la fabrication de la partie de la matrice longitudinale de la presse,
- La figure 2 représente une portion de la zone cylindrique ondulée du moule représenté à la figure 1,
- La figure 3 représente le tube ondulé de la figure 1 allongé pour son utilisation comme partie longitudinale de la matrice,
- La figure 4 montre la disposition des éléments avant leur mise en place dans le presse,
- La figure 5 montre l'ensemble des éléments mis en place dans la presse avant formage,

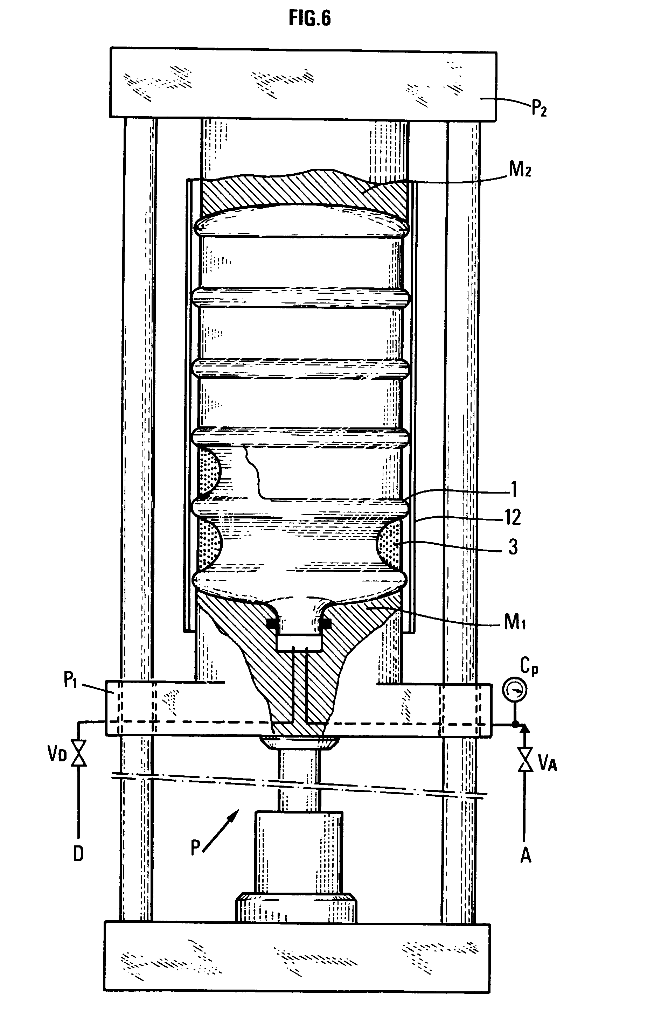

- La figure 6 montre le réservoir obtenu à la fin du processus de fabrication, et
- La figure 7 montre une courbe de formage.

La mise en forme de la gaine métallique interne du réservoir est obtenue à l'aide d'un moule renforcé obtenu selon la méthode d'armage circonférentiel décrite dans la demande FR 90/14.490 (FR-A-2 669 396) que l'on va rappeler ci-dessous.

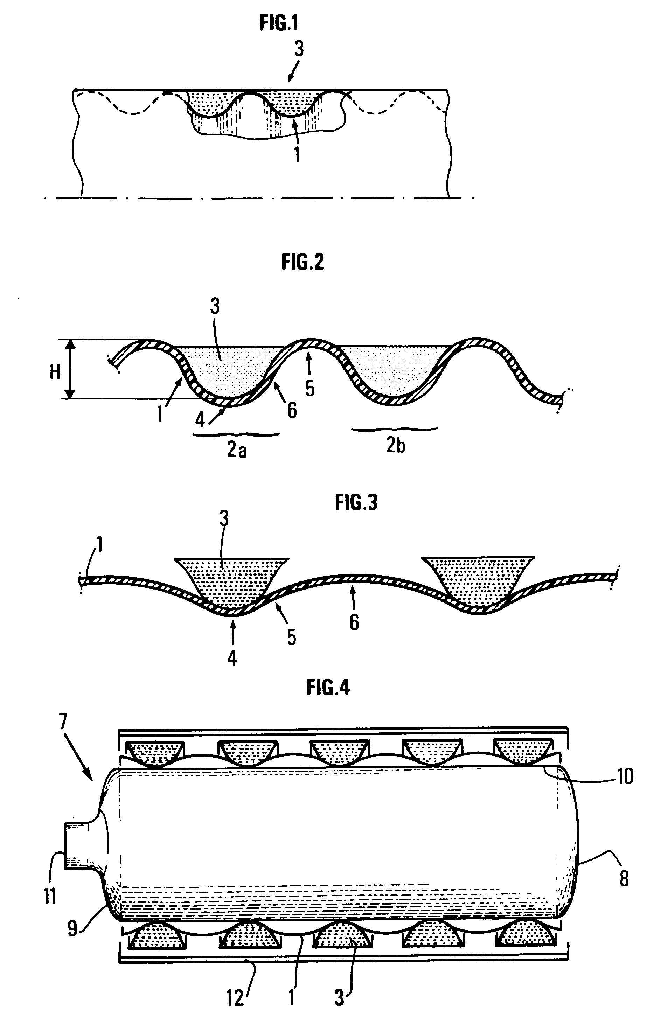

Ce moule est obtenu à partir d'un tube cylindrique ondulé armé 1, par exemple en un matériau plastique, tel que du polypropylène (Fig 1). La surface externe dudit tube constituée de parties creuses et en relief a une forme qui permet d'obtenir l'ondulation souhaitée finale.

La section axiale du tube ondulé est constituée de portions de cercle successives alternativement creuses et en relief 4, 5 qui se raccordent directement ou peuvent être séparées par des portions tronconiques 6. Le tube ainsi formé peut être annelé ou bien encore hélicoïdal. On procède à une opération d'armage circonférentiel du tube 1 qui consiste à remplir ses portions creuses 2a et 2b (Fig 2) de résine armée de fibres 3, que l'on stabilise ensuite par un traitement de stabilisation connu des spécialistes.

Le tube 1 pourvu de ses renforts en résine 3 est ensuite étiré (Fig 3) et stabilisé dans sa nouvelle position d'extension par un traitement thermique approprié.

Différentes méthodes connues peuvent être utilisées pour allonger le tube 1 sans changer la forme initiale des éléments de renforts 3. On peut notamment introduire à chacune des extrémités du tube des manchons gonflables, non représentés) de manière à ce qu'ils viennent prendre appui sur les parois internes du tube ondulé et par augmentation de la pression forcer le tube à s'allonger comme il est bien connu des spécialistes.

On étire le tube ondulé renforcé jusqu'à obtenir la longueur désirée, qui est celle de la longueur de la zone cylindrique interne métallique que l'on souhaite mettre en forme. Le tube ondulé armé à la fin de cette étape est presque lisse intérieurement. Les éléments de renfort 3, dont la forme n'a pas été modifiée, sont en saillie, par rapport à la nouvelle hauteur des ondulations du tube comme le montre la Fig 3. Les éléments de renfort sont en contact avec le tube ondulé seulement par leur partie inférieure.

On stabilise alors le tube ondulé dans sa position d'allongement au moyen, par exemple, d'un traitement thermique à une valeur de température inférieure à celle qui provoquerait une transition vitreuse.

Si la séparation des éléments de renfort bobinés dans les creux adjacents du tube n'a pas été effectuée auparavant, durant les opérations de bobinage par exemple, on effectue cette opération durant l'étape d'étirement.

La figure 4 montre la disposition des éléments avant leur mise en place dans la presse.

On insère dans le tube ondulé armé obtenu en suivant les étapes précédemment décrites une gaine interne 7 constituée, de deux fonds de même épaisseur 8, 9 raccordés l'un à l'autre par une zone cylindrique 10. Celle-ci est constituée par exemple dans un métal à allongement plastique moyen.

Les fonds 8, 9 ont une forme ellipsoidale ou hémisphérique. Bien qu'on puisse les réaliser dans un matériau différent, on utilise de préférence le même matériau que pour la partie cylindrique de façon à faciliter la réalisation de soudures étanches présentant des qualités mécaniques équivalentes à celles de la zone cylindrique.

Au moins un des fonds de la gaine interne est pourvu d'une ouverture et équipé d'un système de fermeture étanche 11 tel qu'une vanne ou un bouchon.

L'ensemble ainsi constitué est glissé dans un tube 12. L'espace annulaire entre lui et les éléments en saillie 3 est choisi suffisamment faible pour éviter au tube ondulé de flamber lorsque la gaine interne métallique se dilate lors du procédé de formage.

Les différents éléments: gaine interne métallique 7, tube ondulé renforcé et tube 12 pour éviter le flambement étant emboîtés, on transfère l'ensemble dans une presse.

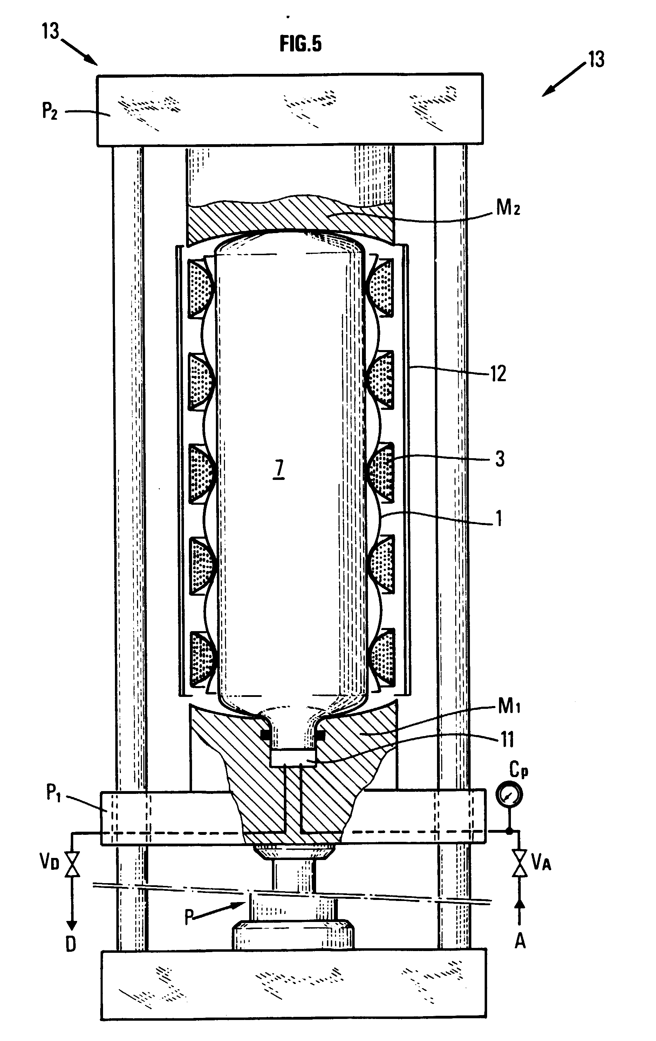

La figure 5 représente l'ensemble précédemment mentionné positionné dans une presse 13 comportant un bâti sur lequel sont positionnés deux plateaux P1, P2, l'un au moins des deux plateaux pouvant être mobile.

La matrice de formage située à l'intérieur de la presse est constituée de deux parties M1, M2 chacune des parties ayant une forme adaptée à la forme des fonds que l'on souhaite pour le réservoir final, les deux parties étant séparées par l'ensemble comprenant le tube ondulé armé et le tube 12 évitant le flambement. Un piston P est relié à un plateau mobile, par exemple au plateau P1.

Au travers du moyen de fermeture 11, on fait pénétrer une conduite d'arrivée A de liquide et une conduite d'évacuation ou de décharge D contrôlée par une vanne de décharge VD. Un capteur de pression Cp est disposé à l'intérieur de la gaine métallique 7 pour y mesurer la pression à tout instant. On peut aussi mesurer la pression du fluide derrière le piston de la presse dans le cas d'emploi d'une presse hydraulique ou mesurer l'effort exercé par la presse sur l'ensemble gaine interne, tube ondulé et tube évitant le flambement. On peut aussi suivre la course ou déplacement du piston.

L'opération de mise en forme ou de formage de la gaine interne métallique se déroule par exemple en suivant les étapes suivantes.

On raccorde la conduite d'arrivée de fluide A par l'intermédiaire d'une vanne de contrôle VA, à des moyens d'alimentation en liquide sous pression (non représentés sur la figure). La conduite de décharge D est pendant ce temps mise à l'air libre.

Les moyens d'alimentation en liquide peuvent être, par exemple, une source d'eau si le réservoir est constitué d'un métal résistant à l'eau, comme de l'acier inoxydable, ou d'huile dans le cas d'un métal sensible à l'eau tel l'acier ordinaire non protégé.

On commence tout d'abord à chasser l'air de la gaine interne 7 ceci jusqu'à ce qu'elle ne contienne presque plus que du liquide sous pression.

On ferme alors l'alimentation en liquide à l'aide de la vanne VA.

On déplace le plateau mobile P1 de façon à raccourcir le réservoir et l'augmentation de pression qui en résulte force la gaine à se dilater transversalement en dehors des zones de résistance constituées par les anneaux de renfort longitudinal c'est-à-dire dans les intervalles situés entre eux et aussi au niveau des fonds qui finissent par épouser la forme des deux matrices terminales M1, M2.

Lorsque la pression du liquide dans la gaine atteint une valeur déterminée, on commence à décharger en ouvrant la vanne VD par intermittence de manière à ce que le formage des ondes se fassent sans allongement excessif du matériau métallique.

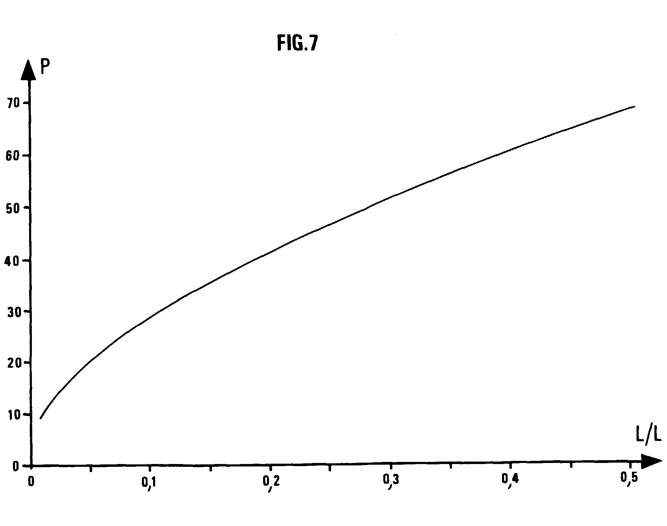

On décharge le liquide en suivant une courbe de formage prédéterminée (figure 7). Cette courbe de formage a été obtenue lors d'essais préalablement effectués au cours desquels on a relevé la valeur de la pression régnant dans la gaine interne en fonction du déplacement du piston, à partir de différentes courbes tracées, on a sélectionné la courbe maîtresse permettant d'obtenir un réservoir présentant les caractéristiques demandées.

L'opération de décharge du liquide et de déplacement d'au moins un plateau continue jusqu'à ce que l'on obtienne la forme désirée pour la gaine interne et le réservoir final constitué de la gaine interne 7 et du tube ondulé armé imbriqués l'un dans l'autre. A la fin de l'opération de mise en forme le tube ondulé armé a repris sa forme initiale non étirée pour laquelle les éléments de renfort ne sont plus en saillie.

On contrôle l'opération de décharge du liquide contenu dans la gaine interne, par exemple, de la façon suivante. On connaît grâce à la courbe de décharge optimale utilisée comme courbe de référence, la valeur de la pression qui doit régner dans le réservoir pour un allongement donné, donnant un réservoir de caractéristiques déterminées.

On règle l'ouverture de la vanne de décharge VD de façon que la pression suive au mieux la courbe de décharge optimale ou courbe maîtresse.

On ne sortirait pas du cadre de l'invention en utilisant un automate programmable ou tout autre dispositif électronique de pilotage, pour contrôler automatiquement l'opération de formage de façon que la pression du liquide suive la courbe de décharge optimale prédéterminée.

On ne sortira pas de la présente invention si l'on utilise une structure de type "accordéon". Dans ce cas, la portion creuse pourra être garnie sur sensiblement toute sa hauteur H. De la même façon, l'ondulation pourra être sinusoidale ou approchante.

De même, on ne sortirait pas de l'invention si on utilisait deux conduites concentriques reliées à des vannes équipant le fond de la gaine interne ou si la conduite d'arrivée du fluide était positionnée sur l'un des fonds et la conduite de décharge sur l'autre fond du réservoir.

## Revendications

1. Procédé de fabrication d'un réservoir métallique utilisant un tube ondulé (1) dont les parties externes creuses (4) sont pourvues d'éléments de renforts (3), caractérisé en ce qu'il comporte les étapes suivantes :
a) on place à l'intérieur du tube ondulé (1) une gaine interne métallique (7) à allongement plastique moyen comportant deux fonds (8,9) séparés par une zone cylindrique (10) de longueur au moins égale à la longueur dudit tube ondulé (1), ladite gaine (7) étant pourvue d'au moins une ouverture (11) sur au moins un de ses fonds (8,9); et
b) on procède au formage du réservoir en exerçant une pression longitudinale sur la gaine interne (7).

2. Procédé selon la revendication 1 caractérisé en ce que la fabrication du tube ondulé (1) comporte les étapes suivantes :
- on renforce circonférentiellement ledit tube ondulé (1) en garnissant sur au moins une partie de leur hauteur (H), les parties externes creuses (4) dudit tube, d'un élément de renfort (3) circonférentiel, puis
- on stabilise l'élément de renfort circonférentiel; et
- on étire le tube ondulé et on le stabilise dans sa nouvelle forme étirée.

3. procédé selon la revendication 1 caractérisé en ce que l'on place autour du tube ondulé (1) un élément, tel qu'un tube (12), permettant d'éviter le flambage longitudinal.

4. Procédé selon la revendication 1 caractérisé en ce que l'étape de formage se fait par raccourcissement de la longueur globale de l'ensemble formé par ledit tube ondulé (1), la gaine interne (7) à allongement plastique moyen et le tube extérieur (12) évitant le flambage longitudinal.

5. Procédé selon la revendication 1 caractérisé en ce que l'étape de formage comporte les opérations suivantes :
- on fait pénétrer dans la gaine interne (7) un liquide sous pression de façon à évacuer l'air contenu dans la gaine interne;
- on ferme l'arrivée du liquide;
- on exerce une pression longitudinale sur la gaine (7) tout en contrôlant la décharge du liquide hors de la gaine.

6. Procédé selon la revendication 5 caractérisé en ce que l'on décharge le liquide hors du réservoir en suivant une courbe de décharge optimale préétablie.

7. Procédé selon la revendication 5 caractérisé en ce que l'on contrôle la décharge du liquide en mesurant au moins un paramètre caractéristique de l'état de l'opération de formage.

8. Procédé selon la revendication 1 caractérisé en ce que l'on utilise un tube rigide en flexion évitant le flambage longitudinal.

9. Procédé selon la revendication 1 caractérisé en ce que l'on utilise des éléments de renfort circonférentiels, réalisés en une résine stabilisable renforcée de fibres, et on soumet chacun d'eux à un traitement permettant la stabilisation de la composition stabilisable.

10. Procédé selon la revendication 1 caractérisé en ce que l'on emploie des éléments de renfort circonférentiels réalisés en une résine photoréticulable que l'on stabilise par exposition à l'action d'une lampe génératrice de rayonnement ultraviolet.

11. Procédé selon la revendication 1 caractérisé en ce que l'on utilise des éléments de renfort circonférentiels réalisés en une résine thermoréticulable que l'on maintient à l'étape de stabilisation dans des conditions permettant à la réticulation de se produire.

12. Procédé selon la revendication 11 caractérisé en ce que l'on emploie une résine thermodurcissable et on la stabilise par chauffage jusqu'à une température permettant le durcissement de la résine.

13. Dispositif pour le formage d'un réservoir métallique comprenant un tube ondulé (1), dont les parties externes creuses (4) sont pourvues d'éléments de renfort (3) caractérisé en ce que le dispositif comprend :
- des moyens de placement, à l'intérieur du tube ondulé (1), d'une gaine interne (7) métallique à allongement plastique moyen comportant deux fonds (8, 9) séparés par une zone cylindrique (10) de longueur au moins égale à la longueur dudit tube ondulé, ladite gaine étant pourvue d'au moins une ouverture sur au moins un de ses fonds,
- des moyens d'alimentation et de décharge de fluide reliés à ladite ouverture de la gaine pour introduire le fluide à l'intérieur de celle-ci ou pour l'en évacuer,
- des moyens de formage comprenant deux matrices (M1, M2) de formage venant s'appliquer sur les fonds de la gaine, et
- des moyens de compression (P1, P2) coopérant avec lesdites matrices (M1, M2) pour comprimer la gaine (7) dans le sens longitudinal de manière à appliquer la paroi cylindrique (10) de la gaine contre le tube ondulé (1).

14. Dispositif selon la revendication 13, caractérisée en ce que les moyens de compression comprennent une presse (13).

## Patentansprüche

1. Verfahren zur Herstellung eines metallischen Speicherbehälters unter Verwendung eines gewellten Rohres (1), dessen hohle äußeren Partien (4) mit Verstärkungselementen (3) versehen sind, dadurch gekennzeichnet, daß es die folgenden Stufen umfaßt:
a) man ordnet im Inneren des gewellten Rohres (1) eine metallische Innenhülle (7) mit mittlerer plastischer Dehnung, die zwei Böden (8, 9) aufweist an, welche durch eine zylindrische Zone (10) von einer Länge wenigstens gleich der Länge dieses gewellten Rohres (1) getrennt sind, wobei diese Hülle (7) mit wenigstens einer Öffnung (11) auf wenigstens einem ihrer Böden (8, 9) versehen ist und
b) man geht zum Formen des Speicherbehälters über, indem man einen Längsdruck auf die Innenhülle (7) ausübt.

2. Verfahren nach Anspruch 1, dadurch gekennzeichnet, daß die Herstellung des gewellten Rohres (1) die folgenden Stufen umfaßt:
- man verstärkt in Umfangsrichtung dieses gewellte Rohr (1), indem man auf wenigstens einem Teil ihrer Höhe (H) die hohlen äußeren Partien (4) dieses Rohres mit einem Umfangsverstärkungselement (3) verkleidet, dann
- das Umfangsverstärkungselement stabilisiert und
- das gewellte Rohr streckt und es in der neuen gestreckten Form stabilisiert.

3. Verfahren nach Anspruch 1, dadurch gekennzeichnet, daß man um das gewellte Rohr (1) ein Element wie beispielsweise ein Rohr (12) anordnet, das es ermöglicht, Knicken in Längsrichtung zu vermeiden.

4. Verfahren nach Anspruch 1, dadurch gekennzeichnet, daß die Formungsstufe erfolgt, indem man die Gesamtlänge der durch dieses gewellte Rohr (1) geformten Anordnung kürzt, wobei die Innenhülle (7) mit plastischer mittlerer Längung und das äußere Rohr (12) das Knicken in Längsrichtung vermeiden.

5. Verfahren nach Anspruch 1, dadurch gekennzeichnet, daß die Formungsstufe die folgenden Vorgänge umfaßt:
- man läßt in die Innenhülle (7) eine Flüssigkeit unter Druck derart eintreten, daß die in der Innenhülle enthaltene Luft evakuiert wird;
- man schließt die Flüssigkeitszufuhr;
- man übt einen Längsdruck auf die Hülle (7) aus, indem man den Auslauf der Flüssigkeit aus der Hülle kontrolliert.

6. Verfahren nach Anspruch 5, dadurch gekennzeichnet, daß man die Flüssigkeit aus dem Speicher entleert, indem man einer vorher festgelegten optimalen Austragskurve folgt.

7. Verfahren nach Anspruch 5, dadurch gekennzeichnet, daß man den Austrag der Flüssigkeit regelt, indem man wenigstens einen charakteristischen Parameter des Zustands des Formvorgangs mißt.

8. Verfahren nach Anspruch 1, dadurch gekennzeichnet, daß man ein biegesteifes Rohr zur Vermeidung der Längsknickung verwendet.

9. Verfahren nach Anspruch 1, dadurch gekennzeichnet, daß man Umfangsverstärkungselemente verwendet, die aus einem mit Fasern verstärkten stabilisierbarem Harz hergestellt sind und jedes hiervon einer Behandlung aussetzt, welche die Stabilisierung der stabilisierbaren Zusammensetzung ermöglicht.

10. Verfahren nach Anspruch 1, dadurch gekennzeichnet, daß man Umfangsverstärkungselemente verwendet, die aus einem fotovernetzbaren Harz hergestellt sind, das man dadurch stabilisiert, daß man es der Wirkung einer Ultraviolettstrahlung erzeugenden Lampe aussetzt.

11. Verfahren nach Anspruch 1, dadurch gekennzeichnet, daß man Umfangsverstärkungselemente verwendet, die aus einem in der Wärme vernetzbarem Harz hergestellt sind, das man im Stabilisierungszustand unter Bedingungen hält, die es ermöglichen, daß die Vernetzung sich einstellt.

12. Verfahren nach Anspruch 11, dadurch gekennzeichnet, daß man ein in der Wärme härtbares Harz verwendet und daß man es durch Erwärmen bis auf eine Temperatur, die die Härtung des Harzes ermöglicht, stabilisiert.

13. Vorrichtung zum Formen eines metallischen Speicherbehälters, ein gewelltes Rohr (1) umnfassend, dessen äußere hohle Partien (4) mit Verstärkungselementen (3) versehen sind, dadurch gekennzeichnet, daß die Vorrichtung umfaßt:
- Mittel, um im Inneren des gewellten Rohres (1) eine metallische Innenhülle (7) mit plastischer mittlerer Längung anzuordnen, die zwei durch eine zylindrische Zone (10) voneinander getrennte Böden (8, 9) umfaßt, deren Länge wenigstens gleich der Länge dieses gewellten Rohres ist, wobei die Hülle mit wenigstens einer Öffnung über wenigstens einem ihrer Böden versehen ist,
- Mittel zur Speisung und zum Entleeren von Fluid, die mit dieser Öffnung dieser Hülle verbunden sind, um das Fluid in deren Inneres einzuführen oder es hieraus abzuziehen,
- Formungsmittel, die zwei Formungsmatrizen (M1, M2) umfassen, die sich gegen die Böden der Hülle legen und
- Kompressionsmittel (P1, P2), die mit diesen Matrizen (M1, M2) zusammenwirken, um die Hülle (7) in Längsrichtung derart zusammenzudrücken, daß die zylindrische Wandung (10) gegen das gewellte Rohr (1) gepreßt wird.

14. Vorrichtung nach Anspruch 13, dadurch gekennzeichnet, daß die Mittel zur Zusammendrückung eine Presse (13) umfassen.

## Claims

1. Method of manufacturing a metal tank using a corrugated tube (1), external hollow portions (4) of which are provided with reinforcing elements (3), characterised in that it consists of the following steps:
a) a metal internal sheath (7) of average elastic limit having two bases (8, 9) separated by a cylindrical zone (10) of a length at least equal to the length of the said corrugated tube (1) is placed inside the corrugated tube (1), the said sheath (7) being provided with at least one opening (11) on at least one of its bases (8, 9); and
b) the tank is shaped by applying a longitudinal pressure to the internal sheath (7).

2. Method as claimed in claim 1, characterised in that the manufacture of the corrugated tube (1) consists of the following steps:
- the said corrugated tube (1) is reinforced circumferentially by filling the external hollow portions (4) of the said tube over at least a part of their height (H) with a circumferential reinforcing element (3), then
- the circumferential reinforcing element is stabilised; and
- the corrugated tube is stretched and stabilised in its new extended shape.

3. Method as claimed in claim 1, characterised in that an element, such as a tube (12) is placed around the corrugated tube (1), so as to prevent longitudinal buckling.

4. Method as claimed in claim 1, characterised in that the forming stage involves shortening the overall length of the assembly made up of the said corrugated tube (1), the internal sheath (7) of average elastic limit and the external tube (12), preventing longitudinal buckling.

5. Method as claimed in claim 1, characterised in that the shaping step consists of the following operations:
- a pressurised liquid is introduced into the internal sheath (7) so as to purge the internal sheath of any air contained therein;
- the liquid supply is shut off;
- a longitudinal pressure is applied to the sheath (7) as the discharge of liquid from the sheath is controlled.

6. Method as claimed in claim 5, characterised in that the liquid is discharged from the tank to conform with a pre-determined optimum discharge curve.

7. Method as claimed in claim 5, characterised in that the discharge of the liquid is controlled by measuring at least one parameter indicative of the status of the shaping operation.

8. Method as claimed in claim 1, characterised in that a tube that is resistant to bending is used to prevent longitudinal buckling.

9. Method as claimed in claim 1, characterised in that circumferential reinforcing elements made from a fibre-reinforced stabilisable resin are used and each of these is subjected to a treatment that will stabilise the stabilisable composition.

10. Method as claimed in claim 1, characterised in that circumferential reinforcing elements made from a photo-curable resin are used which are stabilised by exposure to the action of a lamp generating ultra-violet rays.

11. Method as claimed in claim 1, characterised in that circumferential reinforcing elements made from a heat-convertible resin are used and, at the stabilisation stage, these are kept under conditions conducive to the occurrence of cross-linking.

12. Method as claimed in claim 11, characterised in that a thermo-setting resin is used and is stabilised by heating to a temperature that will allow the resin to set.

13. Device for forming a metal tank comprising a corrugated tube (1), the external hollow portions (4) of which are provided with reinforcing elements (3), characterised in that the device consists of:
- means for positioning inside the corrugated tube (1) a metal internal sheath (7) of average elastic limit having two bases (8, 9) separated by a cylindrical zone (10) of a length at least equal to the length of the said corrugated tube, the said sheath being provided with at least one opening on at least one of its bases,
- means for fluid delivery and discharge connected to the said opening of the sheath to introduce fluid inside the latter or to discharge it therefrom,
- forming means having two forming dies (M1, M2) that are applied to the bases of the sheath, and
- compression means (P1, P2) co-operating with the said dies (M1, M2) to compress the sheath (7) in the longitudinal direction so as to apply the cylindrical wall (10) of the sheath against the corrugated tube (1).

14. Device as claimed in claim 13, characterised in that the compression means have a press (13).
